# EUROPEAN PATENT APPLICATION

(11) **EP 3 192 687 A2**
(43) Date of publication of application: **19.07.2017**
(21) Application number: 16205185.8
(22) Date of filing: 29.09.2016
(51) Int. Cl.: B60K 11/08, B60K 13/02, A01D 34/82, B60K 11/02, E05B 83/24

(54) **WORKING VEHICLE**

(30) Priority: 06.10.2015 JP 2015198543; 06.10.2015 JP 2015198569
(62) Divisional of application: 16191627.5
(71) Applicant: Iseki & Co., Ltd., Matsuyama-shi, Ehime 799-2692 (JP)
(72) Inventor: OKAMOTO, Suguru, Iyo-gun, Ehime 791-2193 (JP); GOTO, Renshi, Iyo-gun, Ehime 791-2193 (JP); TODA, Hirotaka, Iyo-gun, Ehime 791-2193 (JP); KURITA, Kazuyuki, Iyo-gun, Ehime 791-2193 (JP); KITAHARA, Yusuke, Iyo-gun, Ehime 791-2193 (JP); BABA, Yusuke, Iyo-gun, Ehime 791-2193 (JP)
(74) Representative: Spengler, Robert

(57) **Abstract**

A working vehicle where an engine (150) is mounted on a vehicle body (100) of the working vehicle and an engine room (180) is constituted by covering the engine and a radiator (170) with a bonnet (200), characterized by including: a bonnet fixing member (250) which is disposed inside the bonnet (200), wherein a bonnet fixing base part (251) of the bonnet fixing member (250) is provided with a step part (251 a), and a cooling water hose (174) of the radiator (170) is arranged on the step part (251 a).

## Description

### BACKGROUND OF THE INVENTION

### Field of the Invention

The present invention relates to a working vehicle which mounts an engine on the vehicle body and performs, for example, a mowing operation for cutting grass or a lawn and the like.

### Description of the Related Art

Conventionally, known is a working vehicle mounting an engine on a rear part of the vehicle body, wherein an engine room is configured by covering around the engine with a bonnet, a shroud that separates the engine room into a front side region and a rear side region is provided, and the air suction parts are individually provided on the respective portions covering the front side region, where each of the portions is included in one of the front surface part, the right side surface side, and the left side surface side of the bonnet (for example, refer to Japanese Patent Application Publication No. 2014-15168).

### SUMMARY OF THE INVENTION

### Problems to be Solved by the Invention

However, in the case of the conventional working vehicle described above, there is a problem that when dust is accumulated in the air suction part, quantity of air intake decreases, so that cooling effect of the engine decreases.

In view of the above-mentioned conventional problem, an object of the present invention is to furnish a working vehicle in which the cooling effect of the engine is improved.

### Means for Solving the Problems

The 1^{st} aspect of the present invention is a working vehicle where an engine (150) is mounted on a vehicle body (100) of the working vehicle and an engine room (180) is constituted by covering the engine and a radiator (170) with a bonnet (200),
characterized by comprising:
a shroud (400) which separates the engine room (180) into a first region (180A) and a second region (180B) with reference to a front-rear direction of the vehicle body (100);
a first air suction part (240) which is provided on a portion of the bonnet (200), the portion covering the first region (180A); and
a second air suction part (190a) which is provided on a floor surface part (191) of the first region (180A),
wherein the radiator (170) is disposed on the floor surface part (191) of the first region (180A), and
the engine (150) is in the second region (180B).

By means of this, since the air is sucked from also the floor surface part of the first region, the suction area increases, and the cooling efficiency of the engine 150 improves.

The 2^{nd} aspect of the present invention is the working vehicle according to the 1^{st} aspect of the present invention,
wherein the floor surface part (191) is constituted by a net-like member or a punching metal.

By means of this, the air can be sucked from the entire surface of the floor part of the first region, and the inflow of dust can be restrained, so that the first region can be kept cleanly, and the clogging of the radiator can be prevented.

The 3^{rd} aspect of the present invention is the working vehicle according to the 2^{nd} aspect of the present invention,
wherein a rising part (192) rising upward from the floor surface part (191) is provided on both left and right sides of the floor surface part (191), and
the rising part (192) is constituted by the net-like member or the punching metal.

By means of this, the rigidity of the floor surface part increases, and it is possible to suck the air from the three portions, namely, the central plane part, the right side one of both the rising parts, and the left side one of both the rising parts in the lower part of the first region, so that the cooling efficiency of the engine 150 can be improved.

The 4^{th} aspect of the present invention is the working vehicle according to any one of the 1^{st} aspect to the 3^{rd} aspect of the present invention, comprising
an air cleaner (500) which is provided in the first region, and
an air cleaner bracket (510) which fixes the air cleaner (500) before the radiator (170),
wherein the air cleaner bracket (510) has
an air cleaner bracket base part (511) which is provided so as to stand in a gate shape on the floor surface part (191) of the first region (180A), and
an air cleaner fixing part (512) which fixes the air cleaner (500) and is provided on an upper part of the air cleaner bracket base part (511).

By means of this, the constitution where the shroud separates the air cleaner and the engine causes the air cleaner to be less affected by heat from the engine. Additionally, the air cleaner can be arranged without blocking up the forward space of the radiator.

The 5^{th} aspect of the present invention is the working vehicle according to the 4^{th} aspect of the present invention,
wherein the bonnet (200) is openably and closably arranged about a pivot shaft (210) as an axis, the pivot shaft (210) being disposed on a rear side of the engine (150),
a bonnet fixing member (250) is fixed on the air cleaner bracket base part (511),
a lock member (230) is provided on a ceiling part (201) or an upper part of a front surface part (203) of the bonnet (200), the lock member (230) engaging with the bonnet fixing member (250) to go into a locked state.

By means of this, the bonnet fixing member can be arranged in, for example, an upper part space inside the bonnet without decreasing an area for sucking air in front side of the radiator. Additionally, since the bonnet fixing member is arranged in, for example, the upper part space inside the bonnet, the switching operation of the lock state of the bonnet can be performed on the upper surface of the bonnet or the neighborhood and it becomes easy to open and close the bonnet.

### Advantageous Effects of the Invention

According to the present invention, a working vehicle in which the cooling effect of the engine is improved can be furnished.

### BRIEF DESCRIPTION OF THE DRAWINGS

FIG. 1 is a schematic side view of a riding-type mower in an embodiment according to the present invention;
FIG. 2 is a side view which indicates an inside of an engine room which is covered by a bonnet of the riding-type mower in the present embodiment according to the present invention;
FIG. 3 is a plan view of the bonnet of the riding-type mower in the present embodiment according to the present invention;
FIG. 4 is a plan view of the inside of the engine room of the riding-type mower in the present embodiment according to the present invention; and
FIG. 5 is a front view of the inside of the engine room of the riding-type mower in the present embodiment according to the present invention.

### Description of the Reference Numerals

- 1: riding-type mower
- 100: vehicle body
- 130: mower unit
- 150: engine
- 160: blower
- 170: radiator
- 171: standing net
- 172: cooling fan
- 180: engine room
- 190: floor surface part
- 190a: floor intake part
- 200: bonnet
- 250: bonnet fixing member
- 251: bonnet fixing base part
- 252: lock bar
- 300: cut grass storing part
- 400: shroud
- 500: air cleaner
- 510: air cleaner bracket
- 511: air cleaner bracket base part
- 512: air cleaner fixing part

### PREFERRED EMBODIMENTS OF THE INVENTION

Hereinafter, referring to the drawings, descriptions are given regarding a riding-type mower of an embodiment of a working vehicle according to the present invention.

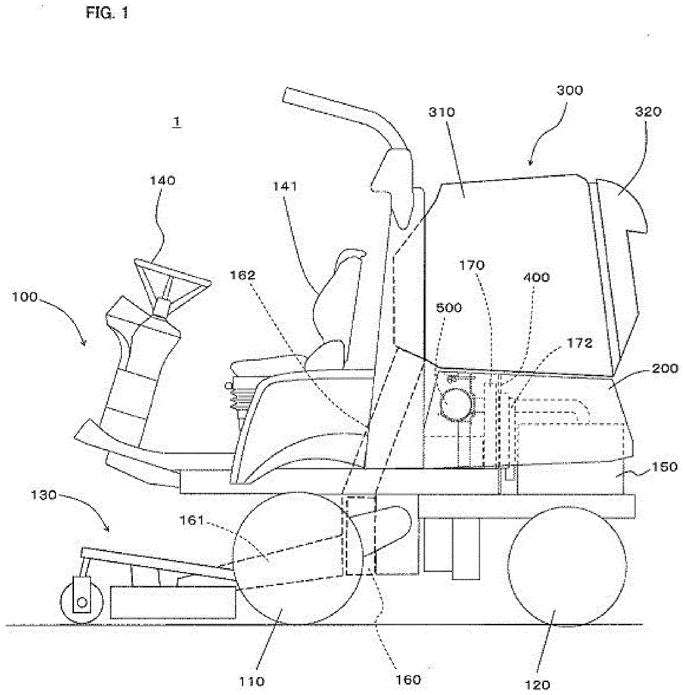

Here, referring to FIGs. 1 to 5, descriptions are given regarding the configuration of the riding-type mower of one embodiment of a working vehicle according to the present invention.

In the first place, referring to FIG. 1, descriptions are given mainly regarding the whole configuration of the riding-type mower 1 of the present embodiment.

Here, FIG. 1 is a schematic side view of the riding-type mower 1 in the present embodiment.

As shown in FIG. 1, the riding-type mower 1 of the present embodiment is provided with a vehicle body 100, a pair of right and left steerable front wheels 110, a pair of right and left drive rear wheels 120, a mower unit 130 which is connected to a front lower part of the vehicle body 100, a steering wheel 140 which is located at a front part of the vehicle body 100, a driver's seat 141 which is located behind the steering wheel 140, an engine 150 which is located at a rear part of the vehicle body 100, a bonnet 200 which is openably and closably supported and which covers the engine 150, a radiator 170 described later, and the like, and a cut grass storing part 300•which is located on an upper part of the bonnet 200 so as to be capable of being lifted up and down.

The cut grass storing part 300 has a container 310 which contains the cut grass that is cut by the mower unit 130 inside, and is configured so as to discharge the cut grass contained in the container 310 from an opening and shutting door 320, which is disposed on the back side of the container 310, to the outside of the container 310 by raising the container 310.

By the way, after the container 310, which is located on the upper part of the bonnet 200, is raised, the opening and shutting of the bonnet 200 is enabled.

The riding-type mower 1 is provided with a blower 160 which absorbs the cut grass that is cut by the mower unit 130 through a first conveyance path 161, and conveys the cut grass to the inside of the container 310 through a second conveyance pass 162.

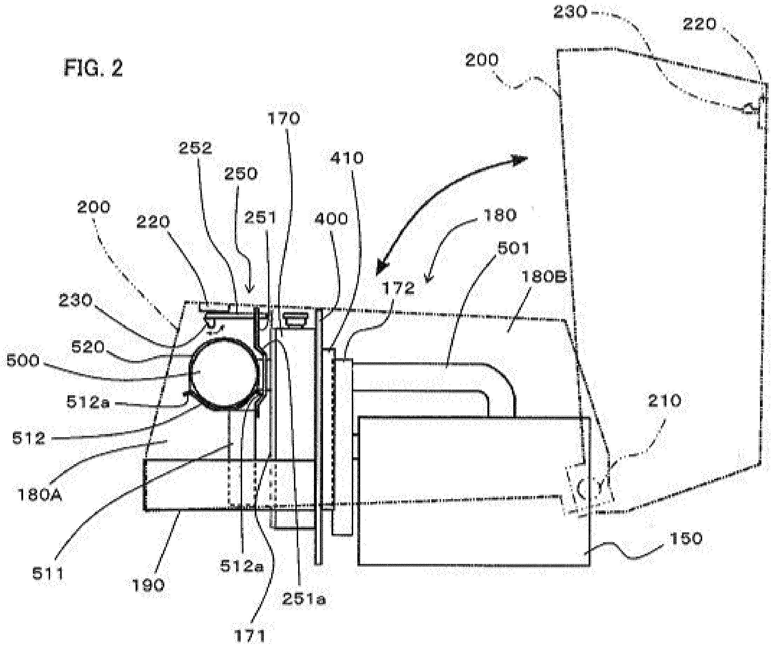

Next, referring to FIGs. 2 to 5, descriptions are given regarding the inner configuration of the engine room 180 which is formed by covering with the bonnet 200.

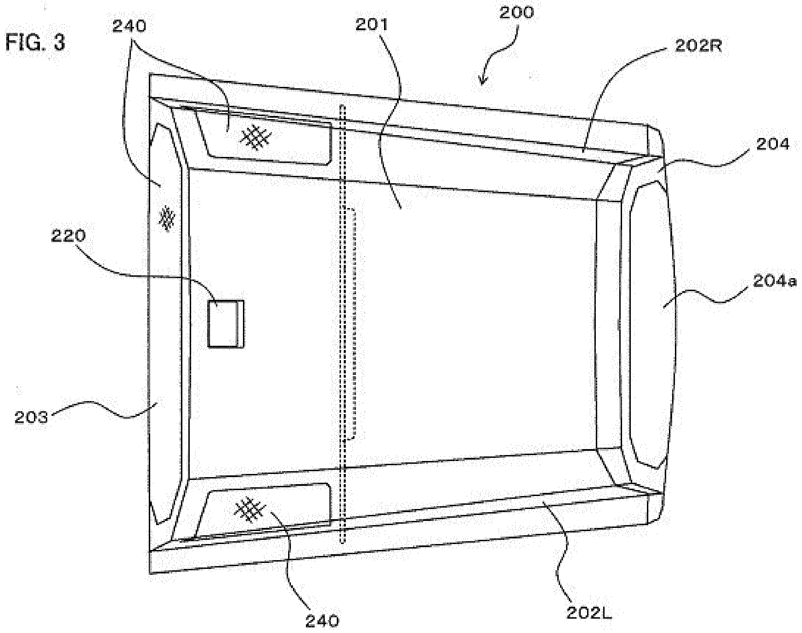

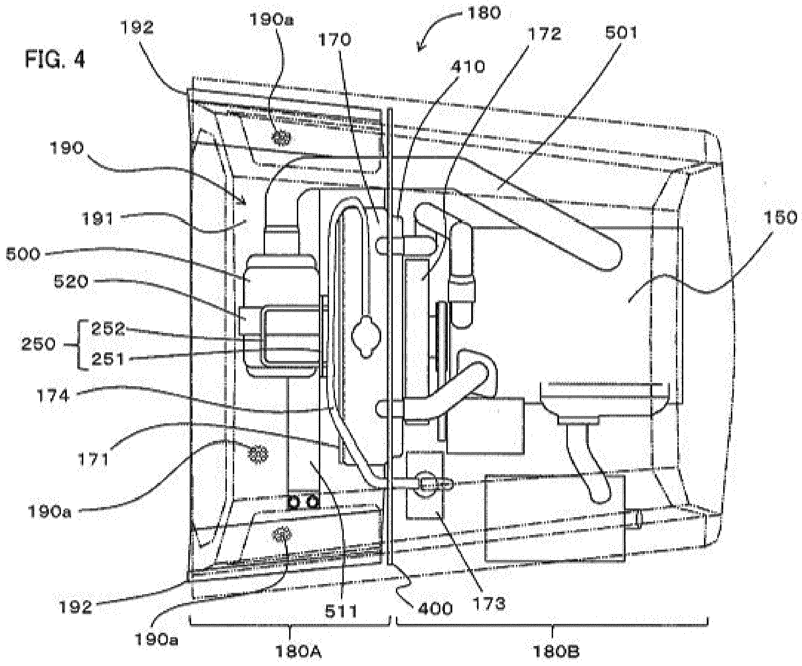

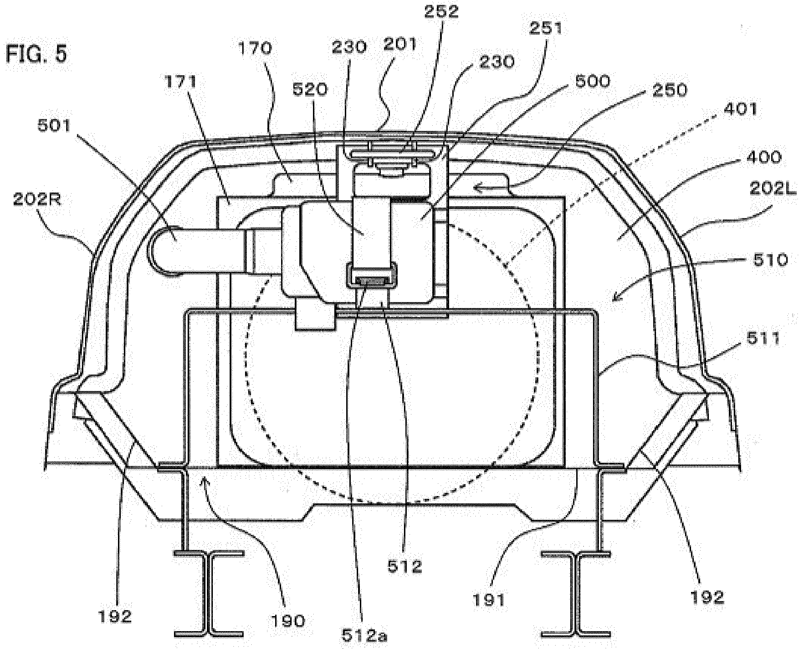

FIG. 2 is a side view which indicates the inside of the engine room 180 which is covered by the bonnet 200 of the riding-type mower 1 in the present embodiment, FIG. 3 is a plan view of the bonnet 200 of the riding-type mower 1, FIG. 4 is a plan view of the inside of the engine room 180 of the riding-type mower 1, and FIG. 5 is a front view of the inside of the engine room 180 of the riding-type mower 1.

As shown in FIG. 2, the bonnet 200 is openably and closably arranged about a pivot shaft 210 as an axis, and the pivot shaft 210 is disposed on a rear side of the engine 150.

Here, the bonnet 200 has a ceiling part 201, a left side surface part 202L which is bent downward from the left end part of the ceiling part 201, a right side surface part 202R which is bent downward from the right end part of the ceiling part 201, a front surface part 203 which is bent downward from the front end part of the ceiling part 201, and a rear surface part 204 which is bent downward from the rear end part of the ceiling part 201. Additionally, the bonnet 200 has a configuration where the base surface side is opened.

As shown in FIGs. 2 and 3, an opening/closing handle 220 for opening or closing the bonnet 200 is disposed on the front side of the center position with reference to a right-left direction of the surface of the ceiling part 201 of the bonnet 200. A lock state where the hook 230, which is turnably disposed on the internal side of the ceiling part 201 of the bonnet 200, is caught on a lock bar 252 described later is released by an operator grasping the opening/closing handle 220 with the operator's hand. And as a result, the operator can open the bonnet 200 with the pivot shaft 210 as a turning axis.

Additionally, as shown in FIGs. 2 to 5, the riding-type mower 1 of the present embodiment is provided with a shroud 400 as a partition wall which separates the engine room 180 into a front side region and a rear side region with reference to a front-rear direction of the vehicle body 100, that is into a first region 180A and a second region 180B.

In the present embodiment, the first region 180A is the front side region of the region which is separated by the shroud 400, and the second region 180B is the rear side region of the region which is separated by the shroud 400.

In the first region 180A, the radiator 170 is arranged in close contact with the front surface side of the shroud 400, a standing net 171 is attachably and detachably arranged on the front surface side of the radiator 170, and an air cleaner 500 is arranged before the standing net 171. The standing net 171 is a filter to prevent the grass and dust from sticking to the radiator 170, and is provided on the front surface of the radiator 170 in a vertically slidable manner so as to be detached. By the way, the descriptions of the installation constitution of the air cleaner 500 will be given later furthermore.

Additionally, in the second region 180B, a cooling fan 172 is arranged on the back side of the radiator 170, and the engine 150 is arranged behind the cooling fan 172.

This constitution where the shroud 400 separates the air cleaner 500 and the engine 150 causes the air cleaner 500 to be less affected by heat from the engine 150.

Additionally, an intake pipe 501, which supplies combustion air that is taken in by the air cleaner 500 to the engine 150, is arranged through the shroud 400 (see FIG. 4).

Additionally, a cooling water hose 174 (see FIG. 4), which connects the radiator 170 and a reservation tank 173 disposed in the second region 180B, is distributed along a step part 251a (see FIG. 2) of a bonnet fixing base part 251 described later, and arranged through the shroud 400 (see FIG. 4).

By the configuration where the cooling water hose 174 is distributed along the step part 251 a (see FIG. 2) of the bonnet fixing base part 251, it is possible to prevent the vibration of the cooling water hose 174.

Additionally, the shroud 400 has a circular intake part 401 in the center thereof.

By rotation of the cooling fan 172, the air which cools the radiator 170 is taken in from the bonnet intake part 240 and the floor intake part 190a described below (see FIG. 4). The bonnet intake part 240 and the floor intake part 190a are faced with the first region 180A. The air, which is taken in from the bonnet intake part 240 and the floor intake part 190a, is absorbed in the second region 180B passing through the standing net 171, the radiator 170 and the circular intake part 401, so that the engine 150 is cooled with the air, and thereafter the air is exhausted from an exhaust part 204a which is disposed on the rear surface part 204 of the bonnet 200 to the outside of the bonnet 200.

Additionally, around the circular intake part 401 formed on the shroud 400, a ring-like fan shroud 410 which restrains the disorder of the air current, which occurs at the tip portions of the cooling fan 172, is provided.

Additionally, the bonnet intake parts 240 are individually formed on the respective portions covering the first region 180A, where each of the portions is included in one of the left side surface part 202L, the right side surface part 202R, and the front surface part 203 of the bonnet 200 (see FIG. 3). Each bonnet intake part 240 is configured by a mesh-like metal net so that the grass, the dust, and the like do not enter into the first region 180A.

By means of this, the space which is located in the front side of the shroud 400 in the engine room 180, namely, the first region 180A can be kept clean, so that it is possible to prevent the air cleaner 500 from sucking dust, and to prevent the radiator 170 from clogging with the dust.

Additionally, the floor surface part 190 of the first region 180A is configured by a punching metal which is a metal plate where the small holes as the floor intake part 190a (see FIG. 4) are made on the entire surface of the metal plate.

The floor surface part 190, as shown in FIG. 5, has rising parts 192, each of which rises towards an oblique upper direction from one of the right and left end sides of the central plane part 191, and each upper end part of the rising parts 192 abuts against one of the lower end sides of the left side surface part 202L and the right side surface part 202R of the bonnet 200.

By means of this, by sucking the air not only from the bonnet intake parts 240 which are individually formed on the respective predetermined positions of the left side surface part 202L, the right side surface part 202R, and the front surface part 203 (see FIG. 3) but also from the floor surface part 190 of the first region 180A, the suction area increases, so that the occurrence of overheat is prevented, and also the cooling efficiency of the engine 150 improves.

Additionally, since the floor surface part 190 is configured by the punching metal, the air can be sucked from the entire surface of the floor part, and the inflow of dust can be restrained, so that the first region 180A can be kept clean, and the clogging of the radiator 170 can be prevented.

Additionally, since each of the right and left end sides of the floor surface part 190 is bent towards the oblique upper direction, the rigidity of the floor surface part 190 increases, and it is possible to suck the air from the three portions, namely, the central plane part 191, the rising parts 192 of the right and left sides in the lower part of the first region 180A, so that the occurrence of overheat is prevented, and also the cooling efficiency of the engine 150 improves.

Next, referring to FIGs. 2 and 5, descriptions are given regarding the installation constitution of the air cleaner 500.

The air cleaner 500 is fixed before the radiator 170 by the air cleaner bracket 510 and the rubber band for fixing 520 as shown in FIGs. 2 and 5.

The air cleaner bracket 510 has an air cleaner bracket base part 511 which has a gate-like shape in a front view, and an air cleaner fixing part 512 as shown in FIG. 5. The air cleaner bracket base part 511 is vertically arranged on the plane part 191 of the floor surface part 190 of the first region 180A, and by means of this, the air cleaner 500 is allowed to be located at the predetermined height from the plane part 191. The air cleaner fixing part 512 is disposed on the upper surface part of the air cleaner bracket base part 511, and has a roughly circular arc shape in a side view to support the base side of the air cleaner 500. Further, each of the end sides of the roughly circular arc shape of the air cleaner bracket base part 511 is bent downward to extend the rubber band for fixing 520 between both the end sides.

By means of this, since the air cleaner bracket base part 511 is configured in the gate-like shape, the air cleaner 500 can be arranged without blocking up the forward space of the radiator 170.

Next, referring to FIGs. 2, 4 and 5, descriptions are given regarding the locking constitution of the bonnet 200.

As shown in FIGs. 2, 4 and 5, a bonnet fixing member 250 is disposed on the central position with reference to a right-left direction of the air cleaner bracket base part 511. The bonnet fixing member 250 can maintain the closed state of the bonnet 200 by allowing the hook 230, which is turnably disposed on the internal side of the ceiling part 201 of the bonnet 200, to be caught on the lock bar 252 of the bonnet fixing member 250.

The bonnet fixing member 250 has a bonnet fixing base part 251, which is vertically arranged on an upper end part of the air cleaner bracket base part 511, and the lock bar 252 which is fixed horizontally to the upper end side of the bonnet fixing base part 251 and which locks the bonnet 200 by allowing the hook 230 to be caught thereon.

The bonnet fixing base part 251 is a plate-like member which stands up from the air cleaner bracket base part 511 in the upper direction and has a step part 251 a which protrudes to the side of the radiator 170 in a side view (see FIG. 2) so as to avoid the interference with a peripheral surface of the air cleaner 500. The step part 251 a is disposed on the roughly middle position of the plate-like member with reference to a vertical direction. Additionally, the lock bar 252 is a stick-like member whose cross-sectional form is circular, and is formed in a roughly U-like shape in a plane view (see FIG. 4).

In a case where the bonnet 200 is closed, the hook 230, which is turnably disposed on the ceiling part 201 of the bonnet 200, turns in a counterclockwise direction in a left side view (see FIG. 2) by contacting with the front end part of the lock bar 252, and after passing the lock bar 252 perfectly, the hook 230 turns in a clockwise direction in the left side view (see FIG. 2), so that a claw part of the hook 230 is hooked at the front end part of the lock bar 252, the closed state of the bonnet 200 is maintained, and the bonnet 200 goes into the lock state. Additionally, when the operator grasps the opening/closing handle 220 with the operator's hand, the lock state is released by the turn of the hook 230 in the counterclockwise direction in the left side view (see FIG. 2), and then when the operator lifts the opening/closing handle 220 upward, the bonnet 200 opens about the pivot shaft 210 as the axis (see FIG. 2).

Since the bonnet fixing base part 251 is fixed to the air cleaner bracket base part 511 having the gate-like shape, the bonnet fixing member 250 can be arranged in an upper part space inside the bonnet 200 without blocking up the forward space of the radiator 170. Additionally, since the bonnet fixing member 250 is arranged in the upper part space inside the bonnet 200, the switching operation of the lock state of the bonnet 200 can be performed on the upper surface of the bonnet 200 and it becomes easy to open and close the bonnet 200.

By the way, the first region 180A which is located in the front side of the shroud 400 of the present embodiment is one example of a first region of the present invention. The second region 180B which is located in the rear side of the shroud 400 of the present embodiment is one example of a second region of the present invention. The bonnet intake part 240 of the present embodiment is one example of a first air suction part of the present invention. The floor intake part 190a of the present embodiment is one example of a second air suction part of the present invention.

By the way, in the above described embodiment, the descriptions are given regarding the configuration in which the first region 180A is located in the front side of the shroud 400 and the second region 180B is located in the rear side of the shroud 400. But, it is not limited to the configuration described above and, for example, such a configuration may be allowed that the first region 180A is located in the rear side of the shroud 400 and the second region 180B is located in the front side of the shroud 400. In this configuration, the component parts which are individually arranged in the first region or the second region are basically the same as the component parts explained in the above described embodiment, but the position relation between the component parts in each region is reversed in the front-rear direction. Namely, in the first region 180A as the rear side region, the radiator 170 is arranged in close contact with the back surface side of the shroud 400, a standing net 171 is attachably and detachably arranged on the back surface side of the radiator 170, and an air cleaner 500 is arranged behind the standing net 171. Additionally, in the second region 180B as the front side region, a cooling fan 172 is arranged on the front side of the radiator 170, and the engine 150 is arranged before the cooling fan 172. Additionally, in this configuration, bonnet intake parts 240 are individually formed on the respective portions covering the first region 180A as the rear side region, where each of the portions is included in one of the left side surface part 202L, the right side surface part 202R, and the front surface part 203 of the bonnet 200. Additionally, the flow direction of air in the engine room 180 becomes opposite to the flow direction of air explained in the above described embodiment.

Additionally, in the above described embodiment, the descriptions are given regarding the configuration in which the hook 230 is disposed on the internal side of the ceiling part 201 of the bonnet 200. But, it is not limited to the configuration described above and, for example, such a configuration may be allowed that the hook 230 is disposed on the internal side of the front surface part 203 of the bonnet 200 (see FIG. 3).

Additionally, in the above described embodiment, the descriptions are given regarding the configuration in which the bonnet intake part 240 is configured by the mesh-like metal net. But, it is not limited to the configuration described above and, for example, such a configuration may be allowed that the bonnet intake part 240 is configured by the punching metal.

Additionally, in the above described embodiment, the descriptions are given regarding the configuration in which the bonnet intake part 240 is configured by the mesh-like metal net. But, it is not limited to the configuration described above and, for example, such a configuration may be allowed that all of the portions covering the first region 180A, where each of the portions is included in one of the left side surface part 202L, the right side surface part 202R, and the front surface part 203 of the bonnet 200 (see FIG. 3), are configured by the net-like member (for example, the mesh-like metal net member) or the punching metal. In this case, the small holes which are made on the entire surface of the net-like member or the punching metal have the function as the bonnet intake part 240.

Additionally, in the above described embodiment, the descriptions are given regarding the configuration in which the whole of the floor surface part 190 is configured by the punching metal. But, it is not limited to the configuration described above and, for example, such a configuration may be allowed that the floor intake part 190a of the floor surface part 190 is configured by the net-like member (for example, the mesh-like metal net member).

Additionally, in the above described embodiment, the descriptions are given regarding the configuration in which the whole of the floor surface part 190 is configured by the punching metal. But, it is not limited to the configuration described above and, for example, such a configuration may be allowed that the whole of the floor surface part 190 is configured by the net-like member (for example, the mesh-like metal net member).

Additionally, in the above described embodiment, the descriptions are given regarding the configuration in which each of the right and left end parts of the floor surface part 190 is provided with the rising part 192. But, it is not limited to the configuration described above and, for example, such a configuration may be allowed that each of the right and left end parts of the floor surface part 190 is not provided with the rising part 192.

Additionally, in the above described embodiment, the descriptions are given regarding the configuration in which the riding-type mower 1 that performs the mowing operation for cutting grass or a lawn is one example of a working vehicle of the present invention. But, it is not limited to the configuration described above and, for example, such a configuration may be allowed that another working vehicle which performs another operation rather than the mowing operation is one example of a working vehicle of the present invention.

Additionally, in the above described embodiment, the descriptions are given regarding the configuration in which the air cleaner 500 is arranged in the first region 180A. But, it is not limited to the configuration described above and, for example, such a configuration may be allowed that the air cleaner 500 is arranged in the second region 180B.

According to a working vehicle of the present invention, an effect of improving the cooling effect of the engine is exerted, and the working vehicle of the present invention is useful for a working vehicle which performs, for example, a mowing operation for cutting grass or a lawn and the like.

## Claims

1. A working vehicle where an engine (150) is mounted on a vehicle body (100) of the working vehicle and an engine room (180) is constituted by covering the engine and a radiator (170) with a bonnet (200),
**characterized by** comprising:
a bonnet fixing member (250) which is disposed inside the bonnet (200),
wherein a base part (251) of the bonnet fixing member (250) is provided with a step part (251 a), and
a cooling water hose (174) of the radiator (170) is arranged on the step part (251 a).

2. The working vehicle according to claim 1, comprising
an air cleaner (500) which is disposed inside the bonnet (200) and in front of the radiator (170), and
an air cleaner bracket (510) which fixes the air cleaner (500),
wherein the bonnet (200) is openably and closably arranged about a pivot shaft (210) as an axis, the pivot shaft (210) being disposed near a rear part of the engine (150),
the bonnet fixing member (250) is fixed on the air cleaner bracket (510),
a lock member (230) is disposed on a ceiling part (201) of the bonnet (200) or an upper part of a front part (203) of the bonnet (200), the lock member (230) being capable of engaging with the bonnet fixing member (250) to go into a locked state.

3. The working vehicle according to claim 2,
wherein the air cleaner bracket (510) is provided with an air cleaner fixing part (512) which supports a base part of the air cleaner (500) and which fixes the air cleaner (500) by allowing a rubber band (520) to be hooked between both end parts of the air cleaner fixing part (512), the both end parts of the air cleaner fixing part (512) being bent downward.
